# EUROPÄISCHE PATENTSCHRIFT

(11) **EP 3 769 972 B1**
(45) Veröffentlichungstag und Bekanntmachung des Hinweises auf die Patenterteilung: **12.04.2023**
(21) Anmeldenummer: 19187552.5
(22) Anmeldetag: 22.07.2019
(51) Int. Cl.: B60C 1/00, C08K 5/18, C08K 5/3437, C08K 5/39, C08K 5/40, C08K 5/41, C08L 7/00, C08L 9/00, C08K 3/06, C08K 5/31, C08K 5/44

(54) **SCHWEFELVERNETZTE KAUTSCHUKMISCHUNG UND FAHRZEUGREIFEN**
SULPHUR-CROSSLINKED RUBBER MIXTURE AND VEHICLE TYRE
MÉLANGE DE CAOUTCHOUC RÉTICULÉ PAR VULCANISATION AU SOUFRE ET PNEUS DE VÉHICULE

(43) Veröffentlichungstag der Anmeldung: 27.01.2021
(73) Patentinhaber: Continental Reifen Deutschland GmbH, 30165 Hannover (DE)
(72) Erfinder: Hengesbach, Frank, 30165 Hannover (DE); Guardalabene, Joe, 30165 Hannover (DE); Torbrügge, Thorsten, 30165 Hannover (DE)
(74) Vertreter: Continental Corporation

(56) Entgegenhaltungen:
- EP-A1- 3 428 225
- EP-A2- 2 947 116
- US-A1- 2008 161 475

## Beschreibung

Die Erfindung betrifft eine schwefelvernetzte Kautschukmischung, insbesondere für Fahrzeugreifen, und einen Fahrzeugreifen.

Es ist bekannt, dass Fahrzeugreifen Bestandteile enthalten, die die Alterung und Oxidation der enthaltenen Kautschuke und sonstigen Bestandteile deutlich verlangsamen und somit die Haltbarkeit über eine relativ lange Lebensdauer des Reifens positiv beeinflussen.

Es gibt jedoch, insbesondere für die Runderneuerung von Fahrzeugreifen, weiterhin den Bedarf deren Haltbarkeit weiter zu optimieren; durch starke Hitzeweinwirkung während des Reifenlebens, wie beim Bremsen, altem Fahrzeugreifen schneller.

Ferner sollen auch Fahrzeugreifen aus Einsatzgebieten mit erhöhten Umgebungstemperaturen oder anspruchsvoller Topographie oder sonstiger starker Beanspruchung, wie beispielsweise dauerhaftem Fahrbetrieb unter hoher Last, der Runderneuerung zugänglich gemacht oder hierfür weiter optimiert werden.

Zudem werden produktionsbedingt manche Bauteile während der Vulkanisation des Reifenrohlings bezogen auf das Vernetzungsprofil der jeweiligen Mischung länger als optimal geheizt, d. h. die Kautschukmischung geht dann nach erfolgter Vulkanisation wieder in die Reversion, also den Abbau des durch die Vulkanisation gebildeten Netzwerkes EP 3 428 225 A1 beschäftigt sich mit den Reißeigenschaften anhand der Zugfestigkeiten von Vulkanisaten von Kautschukmischungen mit einem bestimmten Netzknotenabstand. EP 2 947 116 A2 offenbart eine Kautschukmischung, die eine "renewed rubber formulation" enthält.

Der vorliegenden Erfindung liegt daher die Aufgabe zugrunde, eine schwefelvernetzte Kautschukmischung bereitzustellen, die eine verbesserte Reversionsstabilität und verbesserte Reißeigenschaften, insbesondere nach der Alterung, aufweist.

Gelöst wird diese Aufgabe durch eine schwefelvernetzte Kautschukmischung nach Anspruch 1.

Durch die Kombination der genannten Bestandteile und den Netzknotenabstand von 4,5 bis 10 nm weist die erfindungsgemäße schwefelvernetzte Kautschukmischung eine deutlich bessere Reversionsstabilität und verbesserte Reißeigenschaften, insbesondere nach der Alterung.

Ein weiterer Gegenstand der vorliegenden Erfindung ist ein Fahrzeugreifen, der die schwefelvernetzte Kautschukmischung in wenigstens einem Bauteil aufweist.

Der erfindungsgemäße Fahrzeugreifen weist eine verbesserte Haltbarkeit und eine optimierte Runderneuerbarkeit auf.

Der Fahrzeugreifen kann die schwefelvernetzte Kautschukmischung auch in mehr als einem Bauteil aufweisen.

Bevorzugt weist er die schwefelvernetzte Kautschukmischung wenigstens im Hornprofil, dem Wulstkemreiter (Apex), einer Verstärkungseinlage und/oder dem Laufstreifen auf. Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Cap wenigstens eine erfindungsgemäße schwefelvernetzte Kautschukmischung auf.

Besonders bevorzugt weist der erfindungsgemäße Fahrzeugreifen die schwefelvernetzte Kautschukmischung wenigstens im Hornprofil auf. Insbesondere das Hornprofil ist im Fahrbetrieb starker dynamischer Beanspruchung und der Alterung durch Hitzeeinwirkung von innen (z. B. Bremsen) und außen ausgesetzt. Gleichzeitig ist der Bedarf hoch, die Reversionsstabilität des Hornprofils zu optimieren, um Schwierigkeiten aus dem Herstellungsprozess des Fahrzeugreifens auszugleichen.

Unter "schwefelvernetzter Kautschukmischung" ist eine Kautschukmischung zu verstehen, die aus einer Kautschukfertigmischung (oder Kautschukrohmischung) durch Schwefelvulkanisation hergestellt ist. Eine schwefelvernetzte Kautschukmischung ist somit ein Vulkanisat.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für andere Bauteile von Fahrzeugreifen geeignet, wie z. B. insbesondere sämtliche anderen inneren Reifenbauteile oder die Seitenwand. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzten Kautschukmischung näher beschrieben. Sämtliche Ausführungen gelten auch für den erfindungsgemäßen Fahrzeugreifen, der wenigstens eine erfindungsgemäße Kautschukmischung in wenigstens einem Bauteil aufweist. Die Beschreibung der einzelnen Bestandteile bezieht sich auf die Kautschukmischung vor der Vulkanisation, also die schwefelvernetzbare Kautschukmischung, wenn nichts anderes angegeben ist. Dem Fachmann ist klar, dass die Bestandteile nach der Vulkanistion in veränderter Form vorliegen (können), was insbesondere für die Kautschuke (Polymere), Schwefel und weitere an der Vulkanisation beteiligten Bestandteile gilt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol.

Die Bestimmung des Gewichtsmittels Mw des Molekulargewichtes erfolgt mittels Gelpermeationschromatographie (GPC mit Tetrahydrofuran (THF) als Elutionsmittel bei 40 °C, Apparat PPS, kalibriert mit Poly-styrol-Standard; Größenausschlußchromatographie; engl. SEC = size exclusion chromatography in Anlehnung an BS ISO 11344:2004).

Im Rahmen der vorliegenden Erfindung wird die Abkürzung Mw für das Gewichtsmittel des Molekulargewichts verwendet.

Die in dieser Schrift verwendete Angabe phf (parts per hundred parts of filler by weight) ist dabei die in der Kautschukindustrie gebräuchliche Mengenangabe für Kupplungsagenzien für Füllstoffe.

Die Mengenangaben der Bestandteile beziehen sich jeweils auf die Form, wie sie kommerziell erhältlich ist bzw. bei der Herstellung der Kautschukmischung üblicherweise eingesetzt wird, sofern nichts anderes angegeben ist.

Erfindungsgemäß ist die Kautschukmischung schwefelvernetzt und enthält hierzu wenigstens einen Dienkautschuk, womit die Kautschukmischung einen Dienkautschuk oder ein Gemisch von zwei oder mehreren verschiedenen Dienkautschuken enthalten kann.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei bevorzugt ausgewählt aus der Gruppe bestehend aus natürlichem Polyisopren (NR), synthetischem Polyisopren (IR), epoxidiertem Polyisopren (ENR), Butadien-Kautschuk (BR), Butadien-Isopren-Kautschuk, lösungspolymerisiertem Styrol-Butadien-Kautschuk (SSBR), emulsionspolymerisiertem Styrol-ButadienKautschuk (ESBR), Styrol-Isopren-Kautschuk, Flüssigkautschuken mit einem Molekulargewicht M_{w} von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk und/oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist.

Ferner ist auch ein Gemisch eines oder mehrerer natürlicher Polyisoprene mit einem oder mehreren synthetischen Polyisopren(en) denkbar.

Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum kok-saghyz; Russischer Löwenzahn).

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Eigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Vorzugsweise ist der wenigstens eine Dienkautschuk ausgewählt aus der Gruppe bestehend aus natürlichem Polyisopren (NR, Naturkautschuk), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

Gemäß einer besonders bevorzugten Ausführungsform der Erfindung ist der wenigstens eine Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-ButadienKautschuk (ESBR). Eine derartige Kautschukmischung ist insbesondere für die äußeren Bauteile von Fahrzeugreifen geeignet.

Gemäß einer ganz besonders bevorzugten Ausführungsform der Erfindung ist der wenigstens eine Dienkautschuk ausgewählt aus der Gruppe bestehend aus natürlichem Polyisopren (NR), synthetischem Polyisopren (IR) und Butadien-Kautschuk (BR). Mit einem Polymersystem aus einem oder mehreren der genannten Kautschuke wird die erfindungsgemäße Aufgabe besonders gut gelöst, insbesondere werden eine gute Abriebbeständigkeit, Zugfestigkeit und Beständigkeit gegen Ermüdungsrisse bei gleichzeitig geringer Hysterese/ geringem aus der Kautschukmischung hervorgehendem Hitzeaufbau erzielt.

Gemäß einer besonders vorteilhaften Ausführungsform der Erfindung enthält die Kautschukmischung wenigstens ein natürliches Polyisopren (NR) und zwar bevorzugt in Mengen von 20 bis 55 phr, und gemäß einer besonders vorteilhaften Ausführungsform der Erfindung 20 bis 40 phr, ganz besonders bevorzugt 25 bis 35 phr. Eine derartige Kautschukmischung zeigt eine gute Verarbeitbarkeit und Reversionsstabilität sowie - insbesondere im Hornprofil von Fahrzeugreifen - optimierte Reißeigenschaften, insbesondere nach der Alterung.

Gemäß einer besonders vorteilhaften Ausführungsform der Erfindung enthält die Kautschukmischung wenigstens ein Polybutadien (BR, Butadienkautschuk) und zwar bevorzugt in Mengen von 45 bis 80 phr, besonders bevorzugt 50 bis 80 phr, und gemäß einer besonders vorteilhaften Ausführungsform der Erfindung 60 bis 80 phr, insbesondere 65 bis 75 phr. Hiermit werden besonders gute Reißeigenschaften bei höherer Reversionsstabilität und höherer Resistenz gegen hitzebedingte Alterung der erfindungsgemäßen Kautschukmischung erzielt.

Bevorzugt enthält die schwefelvernetzte Kautschukmischung wenigstens einen Füllstoff, bevorzugt in Mengen von 30 bis 400 phr, besonders bevorzugt 30 bis 200 phr, wiederum bevorzugt 50 bis 100 phr.

Bei dem Füllstoff kann es sich prinzipiell um alle dem Fachmann bekannten Füllstoffe für Kautschukmischungen handeln. Gemäß vorteilhafter Ausführungsformen der Erfindung ist der Füllstoff ein verstärkender Füllstoff, der bevorzugt ausgewählt ist aus der Gruppe bestehend aus Rußen und Kieselsäuren.

Bei der Kieselsäure kann es sich um die dem Fachmann bekannten Kieselsäuretypen, die als Füllstoff für Reifenkautschukmischungen geeignet sind, handeln, wie insbesondere Fällungskieselsäuren.

Beispielsweise kann eine fein verteilte, gefällte Kieselsäure verwendet werden, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 115 bis 200 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Die Begriffe "Kieselsäure" und "Silika" werden im Rahmen der vorliegenden Erfindung synonym verwendet.

Als Ruße kommen alle der fachkundigen Person bekannten Rußtypen in Frage, wie insbesondere die "ASTM-Ruße" nach ASTM D 1765.

In einer Ausführungsform hat der Ruß eine Jodzahl, gemäß ASTM D 1510, die auch als Jodadsorptionszahl bezeichnet wird, zwischen 30 und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 90 bis 200 ml/100g.

Die DBP-Zahl gemäß ASTM D 2414 bestimmt das spezifische Absorptionsvolumen eines Rußes mittels Dibutylphthalat.

Gemäß einer bevorzugten Ausführungsform der Erfindung wird wenigstens ein Ruß eingesetzt, der eine Jodadsorptionszahl gemäß ASTM D 1510 von 80 bis 100 g/kg und eine DBP-Zahl gemäß ASTM D 2414 von 115 bis 127 ml/100 g aufweist.

Die Verwendung eines solchen Rußtyps in der Kautschukmischung, insbesondere für Fahrzeugreifen, gewährleistet einen bestmöglichen Kompromiss aus verstärkender und dämpfender Wirkung, und damit aus den Reißeigenschaften und dem ökologisch relevanten Rollwiderstand.

Die Menge an enthaltenem Ruß beträgt bevorzugt 45 bis 100 phr, insbesondere 60 bis 85 phr.

Bevorzugt ist hierbei, wenn lediglich ein Rußtyp in der jeweiligen Kautschukmischung verwendet wird, es können aber auch verschiedene Rußtypen in die Kautschukmischung eingemischt werden.

Weitere nicht verstärkende Füllstoffe sind beispielsweise Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Die erfindungsgemäße schwefelvernetzte Kautschukmischung enthält 2,0 phr oder mehr wenigstens eines para-Phenylendiamins, wobei eines oder mehrere verschiedene *para-*Phenylendiamine eingesetzt werden können.

Die Substanzklasse der *para*-Phenylendiamine ist dem Fachmann als Alterungsschutzmittel bekannt.

Bevorzugt beträgt die Menge an enthaltenen *para*-Phenylendiaminen 2,0 bis 7 phr, besonders bevorzugt 3,0 bis 7,0 phr, wiederum bevorzugt 3,0 bis 6,0 phr, wobei im Falle eines Gemisches von zwei oder mehreren *para*-Phenylendiaminen die genannten Mengen Gesamtmengen sind.

Bei dempara-Phenylendiamin kann es sich um alle dem Fachmann bekannten Substanzen handeln, wie N-Phenyl-N'-(1,3-dimethylbutyl)-p-phenylendiamin (6PPD), N,N'-Diphenylp-phenylendiamin (DPPD), N,N`-Ditolyl-p-phenylendiamin (DTPD), N-Isopropyl-N'phenyl-p-phenylendiamin (IPPD), Phenyl[4-({[4-({[4-(phenylamino)phenyl] amino } ethyl)phenyl] ethyl} amino)phenyl] amin, Phenyl {4-[2-{[4-(phenylamino)phenyl]amino}ethyl)amino]phenyl}amin, (1-Methyl-2- {[-(phenylamino)phenyl]amino}propyl)[4-(phenylamino)phenyl]amin, N-(1,3-Dimethylbutyl) -N'-(4-cumylphenyl)-p-phenylenediamin, N,N'-Di(1,4dimethylpentyl)-p-phenylendiamin (77PD), N,N'-Di(1-ethyl, 4-methyl-hexyl)-p-phenylendiamin (88PD), N,N'Bis-(1-ethyl-3-methylpentyl)-p-phenylenediamin (DOPD) sowie N,N'-Di-β-naphthyl-p-phenylenediamin (DNPD).

Bevorzugt ist es, dass das para-Phenylendiamin ausgewählt ist aus der Gruppe bestehend aus N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD).

Gemäß einer besonders vorteilhaften Ausführungsform der Erfindung ist das *para-*Phenylendiamin ausgewählt ist aus der Gruppe bestehend aus N-Phenyl-N'-(1,3-dimethylbutyl)-p-phenylendiamin (6PPD) und N,N`-Ditolyl-p-phenylendiamin (DTPD).

Mit den bevorzugt ausgewählten *para*-Phenylendiaminen wird die erfindungsgemäße Aufgabe besonders gut gelöst.

Die erfindungsgemäße schwefelvernetzte Kautschukmischung enthält 2,75 bis 10 phr wenigstens eines Dihydrochinolins, wobei eines oder mehrere Dihydrochinoline eingesetzt werden können. Dihydrochinoline sind dem Fachmann als Alterungsschutzmittel bekannt. Bevorzugt beträgt die Menge an enthaltenen Dihydrochinolinen 3,5 bis 10 phr, ganz besonders bevorzugt 3,8 bis 10 phr und wiederum ganz besonders bevorzugt 3,8 bis 8 phr. Im Falle eines Gemisches aus zwei oder mehreren verschiedenen Dihydrochinolinen beziehen sich die Mengenangaben auf die Gesamtmengen an Dihydrochinolinen.

Bevorzugt ist es, dass das Dihydrochinolin ausgewählt ist aus der Gruppe bestehend aus 2,2,4-Trimethyl-1,2-dihydrochinolin (TMQ) und 6-Ethoxy-2,2,4-Trimethyl-1,2-dihydrochinolin (ETMQ).

Gemäß einer besonders vorteilhaften Ausführungsform der Erfindung ist das Dihydrochinolin 2,2,4-Trimethyl-1,2-dihydrochinolin (TMQ).

Mit den bevorzugt ausgewählten Dihydrochinolinen wird die erfindungsgemäße Aufgabe besonders gut gelöst.

Die erfindungsgemäße Kautschukmischung ist schwefelvernetzt.

Die Begriffe "vulkanisiert" und "vernetzt" werden im Rahmen der vorliegenden Erfindung synonym verwendet.

Die erfindungsgemäße schwefelvernetzte Kautschukmischung enthält 0,5 bis 10 phr, bevorzugt 0,5 bis 8 phr, wenigstens eines Reversionsschutzmittels.

Gemäß vorteilhafter Ausführungsformen der Erfindung enthält die schwefelvernetzte Kautschukmischung 0,7 bis 8,0 phr wenigstens eines Reversionsschutzmittels.

Gemäß einer besonders vorteilhaften Ausführungsform der Erfindung enthält die schwefelvernetzte Kautschukmischung 0,8 bis 6,0 phr wenigstens eines Reversionsschutzmittels.

Die genannten Mengenangaben des wenigstens einen Reversionsschutzmittels beziehen sich - wie eingangs auch erläutert - jeweils auf die Substanzen, wie sie bei der Herstellung der Kautschukmischung zugegeben werden, also noch auf den unvernetzten Zustand.

Die genannten Mengenangaben des wenigstens einen Reversionsschutzmittels beziehen sich in vorteilhaften Ausführungsformen auf jeweils ein Reversionsschutzmittel, denn erfindungsgemäß muss für wenigstens ein Reversionsschutzmittel die Bedingung gelten, dass es in Mengen von 0,5 bis 10 phr enthalten ist.

Es können dabei gemäß der vorteilhaften Ausführungsformen zusätzlich weitere Substanzen in anderen Mengen enthalten sein, die ebenfalls eine Wirkung als Reversionsschutzmittel haben können.

Bevorzugt beträgt die Gesamtmenge an Substanzen, die eine Wirkung als Reversionsschutzmittel haben 0,5 bis 12 phr, besonders bevorzugt 0,5 bis 10 phr.

Reversionsschutzmittel sind dem Fachmann bekannt. Hierbei handelt es sich um Substanzen, die den Abbau des durch die Vulkanisation gebildeten Polymernetzwerk-Systems durch weitere Hitzeeinwirkung verlangsamen.

Weiterhin ist dem Fachmann bekannt, dass dafür verschiedene Reaktionsmechanismen, abhängig vom eingesetzten Reversionsschutzmittel, ablaufen, mit dem Ziel zumindest eine der beiden parallel ablaufenden und in erster Linie für die Reversion verantwortlichen Reaktionen zu unterbinden bzw. zerstörte Teile des Polymer-Netzwerk-Systems ersetzend zu reparieren. Einige der dem Fachmann bekannten Reversionsschutzmittel bilden monosulfidische Netzwerkbrücken, andere bilden hybride Netzwerkbrücken, indem während der Vulkanisation ein Molekülteil der Reversionsschutzmittel in die Schwefelbrücken zwischen den Polymerketten eingebaut wird, wodurch sich ein stabileres, monosulfidisches beziehungsweise hybrides Netzwerk ergibt. Wiederum andere bilden bevorzugt unter Diels-Alder - Reaktion zwischen konjugierten ungesättigten Polymerbestandteilen, die typischerweise durch Modifikation an der Polymer-Hauptkette während der Reversion entstehen, neue Vernetzungen.

Erfindungsgemäß ist das Reversionsschutzmittel ausgewählt aus der Gruppe bestehend aus 1,6-Bis(N,N-dibenzylthiocarbamoyldithio)hexan und Hexamethylen-1,6-bis(thiosulfat) Dinatriumsalz-Dihydrat.

Die Substanz 1,6-Bis(N,N-dibenzylthiocarbamoyldithio)hexan ist auch unter dem Handelsnamen "Vulcuren^{®}" erhältlich.

Die Substanz Hexamethylen-1,6-bis(thiosulfat) Dinatriumsalz-Dihydrat ist auch unter dem Handelsnamen "Duralink ^{™} HTS" der Firma Eastman Chemical Company erhältlich.

Gemäß einer ganz besonders vorteilhaften und beispielhaften Ausführungsformen ist das Reversionsschutzmittel 1,6-Bis(N,N-dibenzylthiocarbamoyldithio)hexan.

Die Mengenangaben des wenigstens einen Reversionsschutzmittels beziehen sich jeweils auf die Form, wie sie kommerziell erhältlich ist und bei der Herstellung der Kautschukmischung eingesetzt wird.

Erfindungsgemäß beträgt der Netzknotenabstand der vernetzten Kautschukmischung 4,5 bis 10 nm, bevorzugt 4,75 bis 8 nm und besonders bevorzugt 5,25 bis 7 nm. Hierdurch wird in Kombination mit den genannten Bestandteilen eine Optimierung der Reißeigenschaften insbesondere nach der Alterung und eine verbesserte Reversionsstabilität erzielt.

Der Netzknotenabstand der vernetzten Kautschukmischung wird mittels der dynamischen Differenzkalorimetrie, wie unten beschrieben, bestimmt.

Wenn der Netzknotenabstand in der erfindungsgemäßen vernetzten Kautschukmischung größer als 10 nm ist, werden die Hystereseeigenschaften verschlechtert und die Härte und die Steifigkeit sinken auf ein zu geringes Niveau.

Wenn der Netzknotenabstand in der erfindungsgemäßen vernetzten Kautschukmischung kleiner als 4,5 nm ist, verschlechtern sich die Reißeigenschaften.

Der Netzknotenabstand wird insbesondere und bevorzugt durch die Art und Menge an eingesetzten Vulkanisationschemikalien, insbesondere Reversionsschutzmittel sowie ggf. Schwefel und/oder Schwefelspender sowie ggf. Vulkanisationsbeschleuniger, eingestellt.

### Allgemein: Netzknotenabstand durch eine definierte Anzahl an Schwefelatomen im Netzwerk

Gemäß einer bevorzugten Ausführungsform enthält die Kautschukmischung vor der Vulkanisation hierzu ein Vulkanisationssystem, welches 0,01 bis 0,14 mol pro 100 phr Dienkautschuk (mhr),
bevorzugt 0,01 bis 0,040 mhr, ganz besonders bevorzugt 0,01 bis 0,025 mhr an Schwefelatomen für das Netzwerk bereitstellen kann.

Die erfindungsgemäße schwefelvernetzte Kautschukmischung basiert somit gemäß einer vorteilhaften Ausführungsform auf einem Vulkanisationssystem, durch welches 0,01 bis 0,14 mol pro 100 phr Dienkautschuk (mhr),
bevorzugt 0,01 bis 0,040 mhr, ganz besonders bevorzugt 0,01 bis 0,025 mhr, an Schwefelatomen in das Netzwerk eingebaut sind.

Hierbei gehen in die Molmenge an Schwefel alle Schwefelatome ein, die in das Netzwerk eingebaut werden, auch wenn sie nicht intermediär separat als solche freigesetzt werden; dies gilt insbesondere für Molekülteile -S-Rest-S-, die aus Reversionsschutzmitteln - wie beispielsweise 1,6-Bis(N,N-dibenzylthiocarbamoyldithio)hexan (Vulcuren^{®}) - stammen und im Netzwerk zwischen den Polymerketten eingebaut werden. Der genannte Molekülteil -S-Rest-S- liefert 2 Schwefelatome. Der Schwefel kann ferner aus elementar zugegebenem Schwefel oder Schwefelspendern (schwefelspendenden Substanzen) stammen. Auch der durch die als Reversionsschutzmittel ggf. enthaltene Substanz Tetrabenzylthiuramdisulfid (TBzTD) bereitgestellte Schwefel geht dann in die Molmenge an Schwefel mit ein.

Der Netzknotenabstand kann alleine durch die Zugabe von Reversionsschutzmittel und ggf. Schwefel und/oder Schwefelspender herbeigeführt werden. Die Zugabe weiterer Beschleuniger ist nicht zwingend erforderlich, aber ebenfalls denkbar.

### Ausführungsform 1: Netzknotenabstand durch 1,6-Bis(N,N-dibenzylthiocarbamoyldithio)hexan als alleinige Vulkanisationschemikalie

Gemäß einer bevorzugten Ausführungsform enthält die Kautschukmischung vor der Vulkanisation hierzu ein Vulkanisationssystem, welches 1,6-Bis(N,N-dibenzylthiocarbamoyldithio)hexan (Vulcuren^{®}) als alleinige Vulkanisationschemikalie umfasst, wobei die Kautschukmischung 1,6-Bis(N,N-dibenzylthiocarbamoyldithio)hexan bevorzugt in den Mengen von 4,0 phr bis 10,0 phr, besonders bevorzugt 6,0 bis 9,0 phr, enthält.

### Ausführungsform 2: Netzknotenabstand durch ein effizientes Vulkanisationssystem aus Schwefel und weiterem Vulkanisationsbeschleuniger

Gemäß einer weiteren bevorzugten Ausführungsform enthält die Kautschukmischung vor der Vulkanisation ein Vulkanisationssystem, welches neben dem erfindungsgemäß enthaltenen Reversionsschutzmittel wenigstens einen (weiteren) Beschleuniger und Schwefel umfasst. Unter "weiterem Beschleuniger" sind hier alle dem Fachmann bekannten Vulkanisationsbeschleuniger zu verstehen, die nicht als erfindungsgemäß enthaltenes Reversionsschutzmittel der noch unvernetzten Kautschukmischung zugegeben werden.

Dabei ist der weitere Beschleuniger bevorzugt ausgewählt aus der Gruppe bestehend aus Thiazolbeschleunigem, Mercapto beschleunigern, Sulfenamidbeschleunigern, Thiophosphatbeschleunigern, Thioharnstoffbeschleunigern, Xanthogenat-Beschleunigern und Guanidin-Beschleunigern.

Substanzen, die eine beschleunigende Wirkung haben können und aber bereits als Reversionsschutzmittel enthalten sein können, wie insbesondere Tetrabenzylthiuramdisulfid (TBzTD), zählen im Rahmen der vorliegenden Erfindung nicht zu den weiteren Beschleunigern.

Besonders bevorzugt ist der weitere Beschleuniger ausgewählt aus der Gruppe bestehend aus Sulfenamidbeschleunigern und Guanidin-Beschleunigern.

Bevorzugt ist es, wenn zumindest ein Sulfenamidbeschleuniger enthalten ist, der bevorzugt ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS) und N-tert-Butyl-2-benzothiazylsulfenamid (TBBS).

Besonders bevorzugt ist wenigstens N-tert-Butyl-2-benzothiazylsulfenamid (TBBS) als weiterer Beschleuniger enthalten.

Gemäß dieser bevorzugten Ausführungsform umfassend wenigstens einen weiteren Beschleuniger sind bevorzugt 0,1 bis 0,5 mol Beschleuniger pro mol für das Netzwerk zur Verfügung gestellter Schwefelatome, besonders bevorzugt 0,25 bis 0,4 mol Beschleuniger pro mol für das Netzwerk zur Verfügung gestellter Schwefelatome (s. oben) an weiterem Beschleuniger in der noch unvulkanisierten Kautschukmischung enthalten.

Ein derartiges Vulkanisationssystem wird auch als effizientes Vulkanisationssystem bezeichnet. Hierbei ist die molare Menge an Beschleuniger gegenüber der Menge an Schwefel vergleichsweise hoch und es bilden sich bei der Vernetzung vermehrt monosulfidische Schwefelbrücken zwischen den Polymerketten aus.

Bevorzugt ist es, dass in dieser Ausführungsform, umfassend wenigstens einen weiteren Beschleuniger und Schwefel, die Menge an Reversionsschutzmittel 0,5 bis 4 phr, besonders bevorzugt 0,5 bis 3 phr, wiederum bevorzugt 0,5 bis 2 phr, beträgt.

Das Reversionsschutzmittel ist auch hier bevorzugt aus den oben genannten Gruppen und gemäß den bevorzugten, besonders bevorzugten und ganz besonders bevorzugten usw. Ausführungsformen ausgewählt.

Gemäß einer ganz besonders vorteilhaften Ausführungsform handelt es sich auch hier um 1,6-Bis(N,N-dibenzylthiocarbamoyldithio)hexan und/oder Hexamethylen-1,6-bis(thiosulfat) Dinatriumsalz-Dihydrat, insbesondere 1,6-Bis(N,N-dibenzylthiocarbamoyldithio)hexan.

Auch in dieser Ausführungsform der Erfindung kann der Schwefel durch elementar zugegebenen Schwefel und/oder durch schwefelspendende Substanzen bereitgestellt werden. Ferner geht auch hier der aus Substanzen wie Vulcuren^{®} in das Netzwerk eingebaute Schwefel wie oben beschrieben in die Berechnung mit ein.

Als schwefelspendende Substanz (Schwefelspender) können im Rahmen der Erfindung allgemein und in den vorstehend genannten Ausführungsformen dabei alle dem Fachmann bekannten schwefelspendenden Substanzen verwendet werden, worunter auch schwefelspendende Silane fallen, wie 3,3 `-Bis(triethoxysilylpropyl)tetrasulfid (TESPT). Bei der Berechnung der Molmenge an Schwefel ist dann zu berücksichtigen, wieviele Schwefelatome jeweils an dem durch die Vulkanisation gebildeten Polymer-Schwefel-Netzwerk teilnehmen. So stellt 1 Mol 3,3'-Bis(triethoxysilylpropyl)tetrasulfid (TESPT) 2 Mol Schwefelatome für das Netzwerk zur Verfügung.

Außerdem können in der Kautschukmischung Vulkanisationsverzögerer vorhanden sein.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Weichmacher,
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, insbesondere Klebharze
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen,
g) Aktivatoren und/oder Agenzien für die Anbindung von Füllstoffen, insbesondere Kieselsäure, wie beispielsweise Silan-Kupplungsagenzien,
h) zusätzlich zu den erfindungsgemäßen Alterungsschutzmitteln noch andere (weitere) Alterungsschutzmittel, die nicht unter die erfindungsgemäß enthaltenen Alterungsschutzmittel fallen.

In der erfindungsgemäßen Kautschukmischung kann wenigstens ein Silan-Kupplungsagens enthalten sein, bevorzugt in Mengen von 1 bis 22 phf, bevorzugt 5 bis 15 phf. Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Bei den Silan-Kupplungsagenzien kann es sich um alle dem Fachmann bekannten Typen handeln.

Ferner können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung).

Aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363^{®} von der Firma Evonik Industries vertrieben werden.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder insbesondere Harzsäuren oder Faktisse oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Der Weichmacher ist besonders bevorzugt ausgewählt aus der Gruppe bestehend aus Flüssig-Polymeren und Mineralölen.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Die erfindungsgemäße Kautschukmischung enthält gemäß vorteilhafter Ausführungsformen 0,5 bis 8 phr, besonders bevorzugt 1 bis 5 phr wenigstens eines Klebharzes. Als Klebharze können natürliche oder synthetische Harze, wie Kohlenwasserstoffharze, eingesetzt werden, die als Klebrigmacher wirken. Die Kohlenwasserstoffharze können phenolisch, aromatisch oder aliphatisch sein. Bevorzugt sind die Klebharze ausgewählt aus der Gruppe, bestehend aus Kolophoniumharzen und deren Estern, Terpen-Phenol-Harzen, Alkin-Phenol-Harzen, Phenol-Harzen und Cumaron-Inden-Harzen, wobei Phenol-Harze für die vorliegende Erfindung besonders gut geeignet sind.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) in den oben genannten Mengen enthalten sein.

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Bauteil wie dem Hornprofil, einer Verstärkungseinlage, dem Wulstkemreiter und/oder dem Laufstreifen, insbesondere in der Cap eines Laufstreifens mit Cap/Base-Konstruktion. Unter "Verstärkungseinlage" ist im Rahmen der Erfindung prinzipiell jegliche Verstärkungseinlage innerhalb eines Fahrzeugreifens zu verstehen, welche wenigstens eine vernetzte Kautschukmischung umfasst. Im Besonderen handelt es sich bei dem Bauteil um eine mondsichelförmige Verstärkungseinlage, wie sie in Notlaufreifen insbesondere im Seitenwandbereich angeordnet ist.

Zur Verwendung in Fahrzeugreifen wird die Mischung als Fertigmischung vor der Vulkanisation beispielsweise und bevorzugt in die Form eines Hornprofils gebracht und bei der Herstellung des Fahrzeugreifenrohlings wie bekannt aufgebracht.

Die Herstellung der erfindungsgemäßen Kautschukmischung zur Verwendung in anderen Bauteilen in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für z. B. den Laufstreifen, die Seitenwand oder eine oder mehrere unterschiedliche Body-Mischungen dienen dann dem Aufbau eines Reifenrohlings.

Als Body-Mischung werden hierbei die Kautschukmischungen für die inneren Bauteile eines Reifen bezeichnet, wie im Wesentlichen Trennplatte, Innenseele (Innenschicht), Kernprofil, Gürtel, Schulter, Gürtelprofil, Karkasse, Wulstverstärker, Wulstprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in der folgenden Tabelle zusammengefasst sind, näher erläutert werden. Die Vergleichsmischungen sind mit V, die erfindungsgemäße Mischung ist mit E gekennzeichnet.

Die Mischungsherstellung erfolgte nach dem in der Kautschukindustrie üblichen Verfahren unter üblichen Bedingungen in zwei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 175 °C, Zieltemperaturen von 152 bis 167 °C, vermischt wurden. Durch Zugabe des Vulkanisationssystems in der zweiten Stufe (Fertigmischstufe) wurde die Fertigmischung erzeugt, wobei für 180 bis 300 Sekunden bei 90 bis 120 °C gemischt wurde.

Aus sämtlichen Mischungen wurden Prüfkörper durch Vulkanisation für 15 Minuten unter Druck bei 160°C hergestellt und mit diesen Prüfkörpern für die Kautschukindustrie typische Materialeigenschaften mit den im Folgenden angegebenen Testverfahren ermittelt.
- Netzknotenabstand gemäß dynamischer Differenzkalorimetrie: Dabei macht man sich zu Nutze, dass der Phasenübergang flüssig-fest eines Quellmittels innerhalb eines gequollenen polymeren Netzwerkes von der Vernetzungsdichte abhängig ist. Proben der jeweiligen Kautschukmischung werden mit Cyclohexan als Quellmittel aufgequollen; dazu wird die jeweilige Probe mit Cyclohexan extrahiert und anschließend bei Raumtemperatur (RT) zum weiteren quellen stehen gelassen. Anschließend wird die Gefrierpunktsdepression von Cyclohexan im Netzwerk im Vergleich zu der makroskopisch ausgedehnten Flüssigphase bestimmt: Die vorbereitete Probe wird in der Messapparatur abgekühlt und der Wärmefluss aufgenommen. Es ergeben sich zwei Gefrierpeaks, der Peak des reinen Cyclohexans bei ca. 3°C und eine weiterer Peak des in der gequollen Probe befindlichen Cyclohexans. Aus der Temperaturdifferenz berechnet sich der Netzknotenabstand.
- Reversionszeit: Relativer Vernetzungsgrad von 95 % (t_{REV95}) nach erfolgter Vernetzung und beginnender Reversion gemäß ASTM D 5289-12/ ISO 6502 / DIN 53529 mittels rotorlosem Vulkameter (MDR = Moving Die Rheometer)
- Bruchdehnung bei Raumtemperatur gemäß DIN 53504-R1 DIN EN ISO 1183-2 DIN ISO 5725. Die Proben wurden nach Alterung gemessen: Alterung jeweils an Luft für 14 Tage bei 70 °C bzw. 7 Tage bei 100 °C
- Ermüdungsrissbeständigkeit (Ermüdungsbruchlebensdauer) als Anzahl der Lastwechsel bis zum Bruch einer hantelförmigen Probe unter einem sich ständig wiederholenden Dehnungszyklus mit einer Frequenz von 104 ± 8 min⁻¹, bestimmt mit einem Monsanto Fatigue to Failure Tester (abgekürzt: FTF) bei 61 % Dehnung und Raumtemperatur (RT, 23 °C ±2 °C). Beim Erreichen der maximalen Zyklenzahl von 2.000 kc (kilo Zyklen) wird der Test beendet, auch wenn die Probe bis dahin noch nicht gebrochen ist.
   Die Proben wurden nach Alterung gemessen: Alterung jeweils an Luft für 14 Tage bei 70 °C bzw. 7 Tage bei 100 °C.
- Weiterreißwiderstandtest (im weiteren Verlauf synonym als "Trouser Test" bezeichnet) entsprechend DIN ISO 34-1:2004-07, Verfahren A. Der 2±0,2 mm dicke, 100 mm lange und 15±0,5 mm breite Prüfkörper wird mittig parallel zur Längsseite und beginnend an der Querseite 40±5 mm eingeschnitten / gestanzt und so auf 20 bis 25 mm Länge in die obere und untere Einspannklemme einer Zugprüfmaschine nach DIN EN ISO 7500-1 Beiblatt 1:1999-11 mit Diagrammschreiber oder rechnergesteuerter Meßwerterfassung eingespannt, dass eine Hälfte des eingeschnittenen /gestanzten Bereichs in die eine, die andere Hälfte in die andere Richtung gezogen wird, und mit einer Vorschubgeschwindigkeit von 200 mm / min und bei Raumtemperatur (RT 23 °C ± 2 °C) bis zum Zerreißen gedehnt. Dabei wird die maximal erforderliche Kraft aufgezeichnet. Die Proben wurden nach Alterung gemessen: Alterung jeweils an Luft für 14 Tage bei 70 °C bzw. 7 Tage bei 100 °C.

### Verwendete Substanzen

a) Vulcuren ^{®}: 90%ige Reinheit, Fa. Lanxess.
b) Schwefel OT 33: 66,667 Gew.-% Schwefel, 33,333 Gew.-% Öl

Bei der Mischung V3 wurde derselbe Netzknotenabstand wie bei V1 eingestellt, wobei aufgrund des Vulcurens (durch seine Molekülteile umfassend eingebrachten Schwefel und Beschleunigerreste) eine Verringerung der Menge an TBBS und Schwefel nötig waren.

Wie in Tabelle 1 erkennbar ist, zeigt die erfindungsgemäße Kautschukmischung E1 eine deutlich bessere Reversionsstabilität und verbesserte Reißeigenschaften, insbesondere nach der Alterung, als die Vergleichsmischungen V1 bis V4. Dabei wirken die erfindungsgemäßen Merkmale synergistisch zusammen, was an den höheren Werten im Vergleich zu den erwarteten Werten erkennbar ist: in der Spalte "Erw." sind die Werte aufgeführt, die sich ergeben würden, wenn die Maßnahmen rein additiv zusammenwirken würden.

Ein Fahrzeugreifen, der wenigstens eine Kautschukmischung, bevorzugt in wenigstens einem äußeren Bauteil aufweist, weist eine längere Haltbarkeit, insbesondere auch unter wärmeren Einsatzbedingungen, und optimierte Runderneuerbarkeit auf.

**Tabelle 1**

| **Bestandteile** | **Einh.** | **V1** | **V2** | **V3** | **V4** | **E1** | |
|---|---|---|---|---|---|---|---|
| NR | phr | 30 | 30 | 30 | 30 | 30 | |
| BR | phr | 70 | 70 | 70 | 70 | 70 | |
| Ruß N339 | phr | 70 | 70 | 70 | 70 | 70 | |
| Öl | phr | 5,0 | 5,0 | 5,0 | 5,0 | 5,0 | |
| Phenolharz | phr | 5,0 | 5,0 | 5,0 | 5,0 | 5,0 | |
| ZnO | phr | 3,0 | 3,0 | 3,0 | 3,0 | 3,0 | |
| Stearinsäure | phr | 2,0 | 2,0 | 2,0 | 2,0 | 2,0 | |
| Ozonschutzwachs | phr | 2,0 | 2,0 | 2,0 | 2,0 | 2,0 | |
| 6PPD | phr | 2,0 | 2,0 | 2,0 | 3,5 | 3,5 | |
| TMQ | phr | 1,0 | 1,0 | 1,0 | 4,0 | 4,0 | |
| TBBS | phr | 2,5 | 2,5 | 1,9 | 2,5 | 1,9 | |
| Vulcuren ^{® a)} | phr | - | - | 1,0 | - | 1,0 | |
| Schwefel ölverstreckt ^{b)} | phr | 3,675 | 1,235 | 2,77 | 3,675 | 0,99 | |
| Resultierend Schwefel | phr | 2,45 | 0,825 | 1,85 | 2,45 | 0,66 | |
| Netzknotenabstand | nm | 3,5 | 5,5 | 3,5 | 3,9 | 5,5 | |

| **Eigenschaften** | | **V1** | **V2** | **V3** | **V4** | **E1** | **Erw.** |
|---|---|---|---|---|---|---|---|
| Reversionszeit bis 95 % | min | 12,0 | 17,0 | 16,2 | 10,9 | 29,9 | 20,1 |
| Bruchdehnung (nach 14 d, 70 °C, Luft) | % | 164 | 277 | 134 | 200 | 327 | 283 |
| Bruchdehnung (n. 7 d, 100 °C, Luft) | % | 95 | 185 | 93 | 118 | 249 | 206 |
| FTF (nach 14 d, 70 °C, Luft) | kc | 67 | 1108 | 128 | 213 | 2000 | 1315 |
| FTF (nach 7 d, 100 °C, Luft) | kc | 0,6 | 641,6 | 0,9 | 0,2 | 816,9 | 641,5 |
| Trouser (n. 14 d, 70 °C, Luft) | N/mm | 2,5 | 10,4 | 2,4 | 3,5 | 20,2 | 11,3 |
| Trouser (n. 7 d, 100 °C, Luft) | N/mm | 1,7 | 4,2 | 1,8 | 2,0 | 5,2 | 4,6 |

## Patentansprüche

1. Schwefel vernetzte Kautschukmischung, enthaltend wenigstens die folgenden Bestandteile:
- Wenigstens einen Dienkautschuk, und
- 0,5 bis 10,0 phr wenigstens eines Reversionsschutzmittels, wobei das Reversionsschutzmittel ausgewählt ist aus der Gruppe bestehend aus 1,6-Bis(N,N-dibenzylthiocarbamoyldithio)hexan und Hexamethylen-1,6-bis(thiosulfat) Dinatriumsalz-Dihydrat, und
- 2,0 phr oder mehr wenigstens eines para-Phenylendiamins, und
- 2,75 bis 10 phr wenigstens eines Dihydrochinolins,
und wobei der Netzknotenabstand der vernetzten Kautschukmischung 4,5 bis 10 nm beträgt,
wobei der Netzknotenabstand mittels der dynamischen Differenzkalorimetrie bestimmt wird.

2. Schwefel vernetzte Kautschukmischung nach einem der vorherigen Ansprüche, **dadurch gekennzeichnet, dass** das para-Phenylendiamin ausgewählt ist aus der Gruppe bestehend aus
N-Phenyl-N'-(1,3-dimethylbutyl)-p-phenylendiamin (6PPD),
N,N'-Diphenyl-p-phenylendiamin (DPPD),
N,N'-Ditolyl-p-phenylendiamin (DTPD),
N-Isopropyl-N'-phenyl-p-phenylendiamin (IPPD), Phenyl[4-({[4-({[4-(phenylamino)phenyl]amino}ethyl)phenyl]ethyl}amino)phenyl]amin,
Phenyl{4-[2-{[4-(phenylamino)phenyl]amino}ethyl)amino]phenyl}amin,
(1-Methyl-2-{[-(phenylamino)phenyl]amino}propyl)[4-(phenylamino)phenyl]amin,
N-(1,3-Dimethylbutyl) -N'-(4-cumylphenyl)-p-phenylenediamin,
N,N'-Di(1,4dimethylpentyl)-p-phenylendiamin (77PD), N,N'-Di(1-ethyl, 4-methylhexyl)-p-phenylendiamin (88PD), N,N'Bis-(1-ethyl-3-methylpentyl)-p-phenylenediamin (DOPD) sowie N,N'-Di-β-naphthyl-p-phenylenediamin (DNPD).

3. Schwefel vernetzte Kautschukmischung nach Anspruch 2, **dadurch gekennzeichnet, dass** das Dihydrochinolin ausgewählt ist aus der Gruppe bestehend aus 2,2,4-Trimethyl-1,2-dihydrochinolin (TMQ) und 6-Ethoxy-2,2,4-Trimethyl-1,2-dihydrochinolin (ETMQ).

4. Schwefel vernetzte Kautschukmischung nach einem der vorherigen Ansprüche, **dadurch gekennzeichnet, dass** sie auf einem Vulkanisationssystem basiert, durch welches 0,01 bis 0,14 mol pro 100 phr Dienkautschuk (mhr),
bevorzugt 0,01 bis 0,040 mhr, ganz besonders bevorzugt 0,01 bis 0,025 mhr, an Schwefelatomen in das Netzwerk eingebaut sind.

5. Schwefel vernetzte Kautschukmischung nach einem der vorherigen Ansprüche, **dadurch gekennzeichnet, dass** sie auf einem Vulkanisationssystem basiert, welches 1,6-Bis(N,N-dibenzylthiocarbamoyldithio)hexan als alleinige Vulkanisationschemikalie umfasst, wobei die Kautschukmischung 1,6-Bis(N,N-dibenzylthiocarbamoyldithio)hexan bevorzugt in den Mengen von 4,0 phr bis 10,0 phr enthält.

6. Schwefel vernetzte Kautschukmischung nach einem der Ansprüche 1 bis 5, **dadurch gekennzeichnet, dass** sie auf einem Vulkanisationssystem basiert, welches wenigstens einen Beschleuniger und elementaren Schwefel umfasst, wobei die Kautschukmischung 0,1 bis 0,5 mol Beschleuniger pro mol Schwefel an Beschleuniger enthält.

7. Schwefel vernetzte Kautschukmischung nach Anspruch 6, **dadurch gekennzeichnet, dass** der Beschleuniger ausgewählt ist aus der Gruppe bestehend aus Sulfenamidbeschleunigern und Guanidin-Beschleunigern.

8. Schwefel vernetzte Kautschukmischung nach Anspruch 7, **dadurch gekennzeichnet, dass** als Beschleuniger wenigstens ein Sulfenamidbeschleuniger enthalten ist, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS) und N-tert-Butyl-2-benzothiazylsulfenamid (TBBS).

9. Schwefel vernetzte Kautschukmischung nach einem der vorherigen Ansprüche, **dadurch gekennzeichnet, dass** sie wenigstens einen Füllstoff enthält.

10. Fahrzeugreifen, der die schwefelvernetzte Kautschukmischung nach einem der vorherigen Ansprüche wenigstens in einem Bauteil aufweist.

11. Fahrzeugreifen nach Anspruch 10, **dadurch gekennzeichnet, dass** es sich bei dem wenigstens einen Bauteil zumindest um das Hornprofil, und/oder einen Wulstkernreiter und/oder eine Verstärkungseinlage und/oder den Laufstreifen handelt.

## Claims

1. Sulfur-crosslinked rubber mixture containing at least the following constituents:
- at least one diene rubber and
- 0.5 to 10.0 phr of at least one anti-reversion agent, wherein the anti-reversion agent is selected from the group consisting of 1,6-bis(N,N-dibenzylthiocarbamoyldithio)hexane and
hexamethylene-1,6-bis(thiosulfate) disodium salt dihydrate and
- 2.0 phr or more of at least one para-phenylenediamine and
- 2.75 to 10 phr of at least one dihydroquinoline
and wherein the network node spacing of the crosslinked rubber mixture is 4.5 to 10 nm,
wherein the network node spacing is determined by differential scanning calorimetry.

2. Sulfur-crosslinked rubber mixture according to any of the preceding claims, **characterized in that** the para-phenylenediamine is selected from the group consisting of
N-phenyl-N'-(1,3-dimethylbutyl)-p-phenylenediamine (6PPD),
N,N'-diphenyl-p-phenylenediamine (DPPD),
N,N'-ditolyl-p-phenylenediamine (DTPD),
N-isopropyl-N'-phenyl-p-phenylenediamine (IPPD), phenyl[4-({[4-({[4-(phenylamino)phenyl]amino}ethyl)phenyl]ethyl}amino)phenyl]amine,
phenyl{4-[2-{[4-(phenylamino)phenyl]amino}ethyl)amino]phenyl}amine,
(1-methyl-2-{[-(phenylamino)phenyl]amino}propyl)[4-(phenylamino)phenyl]amine,
N-(1,3-dimethylbutyl)-N'-(4-cumylphenyl)-p-phenylenediamine,
N,N'-di(1,4-dimethylpentyl)-p-phenylenediamine (77PD), N,N'-di(1-ethyl-4-methylhexyl)-p-phenylenediamine (88PD), N,N'-bis(1-ethyl-3-methylpentyl)-p-phenylenediamine (DOPD) and N,N'-di-β-naphthyl-p-phenylenediamine (DNPD).

3. Sulfur-crosslinked rubber mixture according to Claim 2, **characterized in that** the dihydroquinoline is selected from the group consisting of 2,2,4-trimethyl-1,2-dihydroquinoline (TMQ) and 6-ethoxy-2,2,4-trimethyl-1,2-dihydroquinoline (ETMQ).

4. Sulfur-crosslinked rubber mixture according to any of the preceding claims, **characterized in that** it is based on a vulcanization system through which 0.01 to 0.14 mol per 100 phr of diene rubber (mhr),
preferably 0.01 to 0.040 mhr, very particularly preferably 0.01 to 0.025 mhr,
of sulfur atoms are incorporated into the network.

5. Sulfur-crosslinked rubber mixture according to any of the preceding claims, **characterized in that** it is based on a vulcanization system which comprises 1,6-bis(N,N-dibenzylthiocarbamoyldithio)hexane as the sole vulcanization chemical, wherein the rubber mixture contains 1,6-bis(N,N-dibenzylthiocarbamoyldithio)hexane preferably in amounts of 4.0 phr to 10.0 phr.

6. Sulfur-crosslinked rubber mixture according to any of Claims 1 to 5, **characterized in that** it is based on a vulcanization system which comprises at least one accelerator and elemental sulfur, wherein the rubber mixture contains 0.1 to 0.5 mol of accelerator per mol of sulfur.

7. Sulfur-crosslinked rubber mixture according to Claim 6, **characterized in that** the accelerator is selected from the group consisting of sulfenamide accelerators and guanidine accelerators.

8. Sulfur-crosslinked rubber mixture according to Claim 7, **characterized in that** the accelerator present is at least one sulfenamide accelerator selected from the group consisting of N-cyclohexyl-2-benzothiazolesulfenamide (CBS), N,N-dicyclohexylbenzothiazole-2-sulfenamide (DCBS), benzothiazyl-2-sulfenomorpholide (MBS) and N-tert-butyl-2-benzothiazylsulfenamide (TBBS).

9. Sulfur-crosslinked rubber mixture according to any of the preceding claims, **characterized in that** it contains at least one filler.

10. Vehicle tire comprising the sulfur-crosslinked rubber mixture according to any of the preceding claims at least in one component.

11. Vehicle tire according to Claim 10, **characterized in that** the at least one component is at least the flange profile and/or a bead apex and/or a reinforcing ply and/or the tread.

## Revendications

1. Mélange de caoutchouc, réticulé par le soufre, contenant au moins les constituants suivants :
- au moins un caoutchouc diénique et
- 0,5 à 10,0 pcc d'au moins un agent de protection contre la réversion, l'agent de protection contre la réversion étant choisi dans le groupe constitué par le 1,6-bis(N,N-dibenzylthiocarbamoyldithio)hexane et le sel disodique dihydraté du hexaméthylène-1,6-bis(thiosulfate) et
- 2,0 pcc ou plus d'au moins une para-phénylènediamine et
- 2,75 à 10 pcc d'au moins une dihydroquinoléine et la distance entre les noeuds de réticulation du mélange de caoutchouc réticulé étant de 4,5 à 10 nm,
la distance entre les noeuds de réticulation étant déterminée à l'aide de la calorimétrie différentielle dynamique,

2. Mélange de caoutchouc réticulé par le soufre selon l'une quelconque des revendications précédentes, **caractérisé en ce que** la para-phénylènediamine est choisie dans le groupe constitué par
la N-phényl-N'-(1,3-diméthylbutyl)-p-phénylènediamine (6PPD),
la N,N'-diphényl-p-phénylènediamine (DPPD),
la N,N'-ditoluyl-p-phénylènediamine (DTPD),
la N-isopropyl-N'-phényl-p-phénylènediamine (IPPD),
la phényl[4-({[4-({[4-(phénylamino)phényl]amino}éthyl)phényl]éthyl}amino)-phényl]amine,
la phényl{4-[2-{[4-(phénylamino)phényl]amino}éthyl)amino]phényl}amine,
la (1-méthyl-2-{[-(phénylamino)phényl]amino}propyl)[4-(phénylamino)phényl]amine,
la N-(1,3-diméthylbutyl)-N'-(4-cumylphényl)-p-phénylènediamine,
la N,N'-di(1,4-diméthylpentyl)-p-phénylènediamine (77PD),
la N,N'-di(1-éthyl, 4-méthyl-hexyl)-p-phénylènediamine (88PD),
la N,N'-bis-(1-éthyl-3-méthylpentyl)-p-phénylènediamine (DOPD) ainsi que
la N,N'-di-β-naphtyl-p-phénylènediamine (DNPD).

3. Mélange de caoutchouc réticulé par le soufre selon la revendication 2, **caractérisé en ce que** la dihydroquinoléine est choisie dans le groupe constitué par la 2,2,4-triméthyl-1,2-dihydroquinoléine (TMQ) et la 6-éthoxy-2,2,4-triméthyl-1,2-dihydroquinoléine (ETMQ).

4. Mélange de caoutchouc réticulé par le soufre selon l'une quelconque des revendications précédentes, **caractérisé en ce qu'**il est à base d'un système de vulcanisation qui incorpore 0,01 à 0,14 mole par 100 pcc de caoutchouc diénique (mcc), de préférence 0,01 à 0,040 mcc, de manière tout particulièrement préférée 0,01 à 0,025 mcc d'atomes de soufre dans le réseau.

5. Mélange de caoutchouc réticulé par le soufre selon l'une quelconque des revendications précédentes, **caractérisé en ce qu'**il est à base d'un système de vulcanisation qui comprend du 1,6-bis(N,N-dibenzylthiocarbamoyldithio)hexane comme unique produit chimique de vulcanisation, le mélange de caoutchouc contenant le 1,6-bis(N,N-dibenzylthiocarbamoyldithio)hexane de préférence en des quantités de 4,0 pcc à 10,0 pcc.

6. Mélange de caoutchouc réticulé par le soufre selon l'une quelconque des revendications 1 à 5, **caractérisé en ce qu'**il est à base d'un système de vulcanisation, qui contient au moins un accélérateur et du soufre élémentaire, le mélange de caoutchouc contenant 0,1 à 0,5 mole d'accélérateur par mole de soufre.

7. Mélange de caoutchouc réticulé par le soufre selon la revendication 6, **caractérisé en ce que** l'accélérateur est choisi dans le groupe constitué par les accélérateurs de type sulfénamide et ceux de type guanidine.

8. Mélange de caoutchouc réticulé par le soufre selon la revendication 7, **caractérisé en ce qu'**au moins un accélérateur de type sulfénamide est contenu comme accélérateur, qui est choisi dans le groupe constitué par le N-cyclohexyl-2-benzothiazolesufénamide (CBS), le N,N-dicyclohexylbenzothiazole-2-sulfénamide (DCBS), le benzothiazyl-2-sulfènemorpholide (MBS) et le N-tert-butyl-2-benzothiazylsulfénamide (TBBS).

9. Mélange de caoutchouc réticulé par le soufre selon l'une quelconque des revendications précédentes, **caractérisé en ce qu'**il contient au moins une charge.

10. Pneumatique de véhicule qui présente le mélange de caoutchouc réticulé par le soufre selon l'une quelconque des revendications précédentes dans au moins un composant.

11. Pneumatique pour véhicule selon la revendication 10, **caractérisé en ce que** ledit au moins un composant est au moins le profilé de terminaison et/ou un bourrage sur tringle de talon et/ou un insert de renforcement et/ou la bande de roulement.
